# EUROPÄISCHE PATENTSCHRIFT

(11) **EP 1 040 309 B1**
(45) Veröffentlichungstag und Bekanntmachung des Hinweises auf die Patenterteilung: **04.02.2004**
(21) Anmeldenummer: 99953600.6
(22) Anmeldetag: 26.08.1999
(51) Int. Cl.: F27D 23/00, C21D 9/56

(54) **GASDICHTUNG VON DURCHLAUF-WÄRMEBEHANDLUNGSANLAGEN MIT SCHUTZGASATMOSHPHÄRE**
GAS SEAL FOR CONTINUOUS THERMAL TREATMENT FACILITIES OPERATED WITH A PROTECTIVE GAS ATMOSPHERE
SYSTEME D'ETANCHEITE AUX GAZ POUR INSTALLATIONS DE TRAITEMENT THERMIQUE EN CONTINU EN ATMOSPHERE INERTE

(30) Priorität: 12.10.1998 DE 19846749
(43) Veröffentlichungstag der Anmeldung: 04.10.2000
(73) Patentinhaber: Otto Junker GmbH, 52152 Simmerath (DE)
(72) Erfinder: SOMMEREISEN, Winfried, D-52070 Aachen (DE)
(74) Vertreter: König, Werner, Dipl.-Ing.
(86) Internationale Anmeldenummer: PCT/DE1999/002667
(87) Internationale Veröffentlichungsnummer: WO 2000/022363

(56) Entgegenhaltungen:
- EP-A- 0 319 948
- DE-A- 4 441 690
- DE-C- 973 548
- US-A- 3 223 396
- US-A- 4 894 009
- PATENT ABSTRACTS OF JAPAN vol. 004, no. 069 (C-011), 22. Mai 1980 (1980-05-22) & JP 55 034645 A (KAWASAKI STEEL CORP), 11. März 1980 (1980-03-11)

## Beschreibung

Die Erfindung betrifft eine aerodynamische Abdichtung von Durchlauf-Wärmebehandlungsanlagen mit Schutzgasatmosphäre mit einen abzudichtenden Öffnungsquerschnitt der Durchlauf-Wärmebehandlungsanlage begrenzenden, auf ein durchlaufendes Metallband gerichteten Schlitzdüsen.

Bei verschiedenen Industrieanlagen werden berührungslose Abdichtungen zwischen zwei Gaszonen gefordert. So besteht entweder das Problem, daß Gase oder Dämpfe, die innerhalb einer Kammer entstehen, nicht in die Außenatmosphäre gelangen sollen oder daß atmosphärische Luft beispielsweise nicht in eine mit Schutzgas beaufschlagte Kammer hingetragen werden soll. Trotzdem soll die Kammer frei zugänglich sein, um das zu behandelnde, berührungsempfindliche Gut zuführen zu können.

In Durchlauföfen für Blechbänder besteht beispielsweise eine solche Forderung. Die Wärmebehandlung leicht oxidierender Bleche erfolgt im Ofen unter Schutzgas. Aufgrund der Oberflächenempfindlichkeit der Blechbänder soll von einer mechanischen Dichtung der Ofenöffnung gegenüber der Außenatmosphäre jedoch möglichst abgesehen werden.

In den vorgenannten Fällen werden deshalb aerodynamische Abdichtungen eingesetzt, bei denen ein Gasstrahl die beiden Gaszonen voneinander trennt.

Aus der DE-PS 37 43 598 ist eine aerodynamische Abdichtung mit einer Doppelschlitzdüse bekannt. Die Düse hat eine mittlere Trennwand, durch die zwei Düsenräume geschaffen werden, in die jeweils das Gas der voneinander abzudichtenden Gaszonen eingeleitet wird. Der Gasstrahl mit seinen beiden Teilstrahlen trifft mit seinem Kembereich auf eine Prallfläche, die z.B. durch das in einen Durchlaufofen einlaufende Blechband gebildet wird. Da in dem Kernbereich des Gasstrahls nur eine geringe Turbulenz herrscht, soll eine Vermischung von Schutzgas und Luft weitgehend vermieden werden.

Die Lösung erfordert, daß die Doppelschlitzdüse bzw. -düsen möglichst nahe an der Oberfläche des durchlaufenden Bandes positioniert werden, um eine gute Dichtwirkung zu erreichen. Da derartige Bänder jedoch nie völlig eben sind, sondern Ausbeulungen und Welligkeiten aufweisen und bei den erreichten Durchlaufgeschwindigkeiten auch kleine Bandbewegungen senkrecht zur Bandoberfläche auftreten, läßt sich diese Forderung nicht ohne weiteres einhalten. Die Doppelschlitzdüsen müssen deshalb in einem bestimmten Mindestabstand vom durchlaufenden Band angeordnet werden und dafür eine entsprechende Schlitzbreite aufweisen. Trotzdem kann es zu Vermischungen von Luft und Schutzgas kommen, so daß einerseits Schutzgasverluste auftreten und andererseits Luft in den Ofen gelangen kann.

Weiter ist aus der DE 44 41 690 A1 eine aerodynamische Abdichtung, beispielsweise für Durchlauföfen, bekannt. Auch hier bilden zwei Gase, welche parallel aus einer zweigeteilten Kammer austreten, einen Gasvorhang senkrecht zu einem Förderband. Diese Ausführung beinhaltet die oben aufgeführten Nachteile der Abdichtung aus DE-PS 37 43 598. Zusätzlich unvorteilhaft erweist sich hier eine Unterteilung der Kammeraustrittsöffnung mittels einer Lochplatte in Kleinstöffnungen, die einen Sperrgasstrahl geringerer Strömungsgeschwindigkeit bewirkt. Ein derartiger Sperrgasstrahl ist wenig geeignet, einem Strömungsimpuls aus einem mit Inertgas betriebenen System entgegenzuwirken.

Weiter ist aus der DE-PS 973 548 eine Abdichtung in Form von Sperrluftstrahlen bekannt, welche an umlaufenden Regenerativ-Wärmetauschern zum Einsatz kommt. Hierbei werden nebeneinander durch einen mit Heizplatten versehenen Rotor warmes Rauchgas und diesem gegenströmende, kühle Luft durchgeleitet. Eine Trennung von Rauchgas und Luft erfolgt mittels Sperrluftstrahlen. Die Düsen hierzu sind zwischen dem Rauchgas- und dem Luftbereich ober- und unterhalb des Rotors angeordnet. Aus ihnen wird mit großer Geschwindigkeit durch den Rotor Sperrluft hindurchgeblasen und diese Sperrluft anschließend wieder abgesaugt. Der so erzeugte Sperrluftstrahl ist für Bänder ungeeignet, da ein Band -ungleich einem mit Heizplatten versehenen Rotornicht von einem Sperrluftstrahl durchdrungen werden kann.

Der Erfindung liegt die Aufgabe zugrunde, eine aerodynamische Abdichtung der eingangs genannten Art anzugeben, mit der die Vermischung de beteiligten Gase weiter gesenkt wird.

Erfindungsgemäß wird die Aufgabe dadurch gelöst, daß jeder Seite des Metallbandes zwei separate, in Durchlaufrichtung des Metallbandes mit Abstand hintereinander angeordnete, jeweils einen senkrecht auf das Metallband oder voneinander weggerichtet winklig auf das Metallband gerichteten Gasstrahl erzeugende Schlitzdüsen zugeordnet sind, von denen die zur Atmosphärenseite gerichteten Schlitzdüsen mit Luft und die zur Seite der Durchlauf-Wärmebehandlungsanlage hin gerichteten Schlitzdüsen mit Schutzgas beaufschlagt sind.

Vorzugsweise sind die Schlitzdüsen zur Einstellung ihres Winkels drehbeweglich angeordnet. Sie sind zweckmäßig an rohrförmigen, drehbar gelagerten und mit Gaskanälen verbundenen Gaszuführungskörpern angeordnet. Gegenüber dem jeweils zugeordneten Gaskanal sind sie beispielsweise zu beiden Seiten mit einer plattenförmigen Dichtung abgedichtet und zur Längsachse des jeweiligen Gaskanals hin mit einem Öffnungsschlitz versehen.

Die Strahlachse kann somit auf die Bedingungen eingestellt werden, die sich durch das jeweils zu behandelnde durchlaufende Band ergeben. Durch die Verdrehung wird gleichzeitig die Veränderung des Abstandes zwischen den Schlitzdüsen und dem Metallband möglich.

Vorteilhaft ist, daß sich unterschiedliche Winkel beider Gasstrahlen der seitlich benachbarten Schlitzdüsen einstellen lassen. Damit läßt sich auch auf einfache Weise ein Druckausgleich zwischen den beiden Gaszonen schaffen, wenn in einer Gaszone mit einem höheren Druck gearbeitet wird, wie es bei den beschriebenen Durchlauföfen in der Regel der Fall ist. Die Schlitzdüsen können in diesem Fall dann auch nicht nur mit verschiedenem Strahlwinkel, sondern auch mit unterschiedlichem Gasdruck betrieben werden.

Ist eine darüber hinausgehende Druckabdichtung erforderlich, so kann die Anordnung wie in bisher bekannter Weise durch zusätzliche Druckdüsen ergänzt werden, die zwischen der hier beschriebenen Schlitzdüsenanordnung und der mit Druck beaufschlagten Kammer positioniert werden. Die Strahlachse der Druckdüsen ist in Richtung auf die Kammer verdreht. Um den Gasdruck im Bereich zwischen den Schlitzdüsen und den Druckdüsen dann abzubauen, ist dort jeweils eine Absaugeinrichtung vorzusehen.

In dem Raum zwischen seitlich benachbarten Schlitzdüsen der erfindungsgemäßen Anordnung baut sich ein turbulentes Gasgemisch zwischen beiden beteiligten Gaskomponenten auf, das aber den abzudichtenden Öffnungsquerschnitt nur mit sehr kleinen Gasmengen zu überwinden vermag. Um auch dieses noch zu vermindern, kann im Bereich zwischen den Schlitzdüsen auf jeder Seite des Metallbandes eine Absaugeinrichtung und/oder ein Brenner angeordnet sein, so daß sich in diesem Raum durch Absaugen des Gasgemisches ein gerinfügig geringerer Druck einstellt als beispielsweise in der Ofenkammer oder es wird der Sauerstoffanteil in diesem Gasgemisch unterstöchiometrisch verbrannt. Eine andere Variante ist, in diesen Raum Schutzgas einzuleiten.

Eine Möglichkeit, die Vermischung in dem Raum zwischen den Schlitzdüsen weiter zu begrenzen, ist, diesen Raum jeweils durch eine senkrecht zum durchlaufenden Metallband verlaufende und nahe an dieses heranreichende Trennwand zu teilen.

Der Gasdurchtritt zwischen den beiden Gaszonen läßt sich auch dadurch weiter vermindern, daß der Raum zwischen den Schlitzdüsen möglichst klein gehalten wird, indem zwischen den Schlitzdüsen nur ein enger Kanal belassen wird. Die Schlitzdüsen werden dazu zweckmäßig jeweils durch eine zum durchlaufenden Metallband parallele Abdeckung verbunden.

Die Erfindung soll an einem Ausführungsbeispiel näher erläutert werden. Die zugehörige Zeichnung zeigt den Durchlaßbereich eines Durchlaufofens für die Wärmebehandlung von Blechbändem mit einer aerodynamischen Abdichtung im Querschnitt.

Der Durchlaufofen ist mit einer Ofenwand 1 versehen, in der ein Banddurchlaß 2 für ein Blechband 3 belassen ist. Die Durchlaufrichtung ist durch einen Pfeil angedeutet. Der Durchlaufofen wird unter Schutzgasatmosphäre betrieben.

Die aerodynamische Abdichtung besteht aus jeweils zwei Schlitzdüsen 13, 14 und 15, 16 zu beiden Seiten des Blechbandes 3, die an Gaszuführungskörpem 4 und 5 bzw. 6 und 7 angeordnet sind. Die zur Ofenseite gerichteten Schlitzdüsen 13 und 15 werden mit Schutzgas, die zur Außenseite gerichteten Schlitzdüsen 14 und 16 werden mit Luft beschickt.

Die Gaszuführungskörper 4 bis 7 sind aus Rohrabschnitten 8 aufgebaut, die auf Achsen 9 drehbeweglich gelagert sind. Gegenüber Gaskanäle bildenden Blaskästen 10 sind sie mittels Dichtplatten 11 abgedichtet. Zur Gasführung sind sie an den Seiten, die in die Blaskästen 10 hineinragen mit Durchlaßöffnungen 12 versehen.

Die gesamte Anordnung ist über Schraubverbindungen 17 mit der Ofenwand 1 verbunden.

Das Blechband 3 bildet für die Düsenanordnung eine Prallplatte. Im Raum zwischen den Schlitzdüsen 13 und 14 bzw. 15 und 16 bildet sich ein Gasgemisch aus Schutzgas und Luft, dessen Vermischung durch ein Trennblech 18 begrenzt wird.

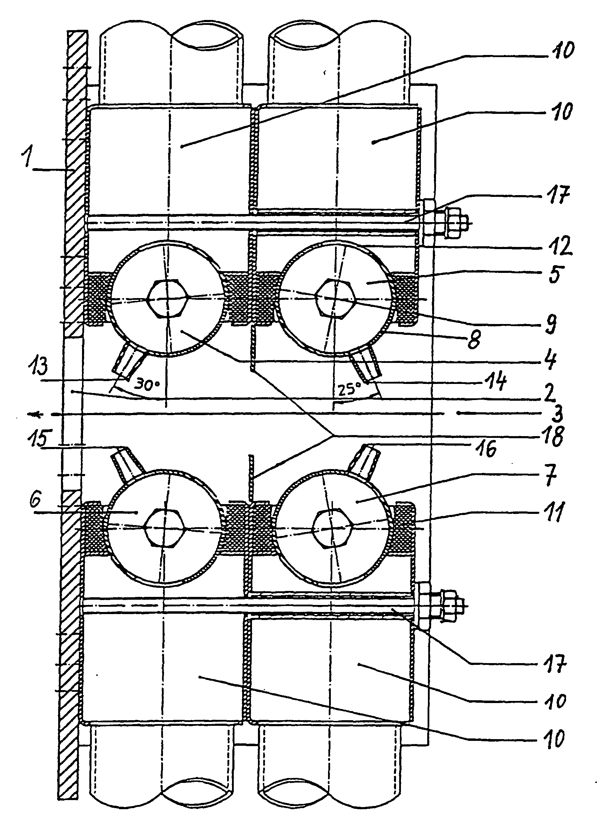

## Patentansprüche

1. Aerodynamische Abdichtung von Durchlauf-Wärmebehandlungsanlagen mit Schutzgasatmosphäre mit einen abzudichtenden Öffnungsquerschnitt der Durchlauf-Wärmebehandlungsanlage begrenzenden, auf ein durchlaufendes Metallband (3) gerichteten Schlitzdüsen, **dadurch gekennzeichnet, dass** jeder Seite des Metallbandes (3) zwei separate, in Durchlaufrichtung des Metallbandes (3) mit Abstand hintereinander angeordnete, jeweils einen senkrecht auf das Metallband (3) oder voneinander weggerichtet winklig auf das Metallband (3) gerichteten und vom anderen beabstandeten Gasstrahl erzeugende Schlitzdüsen (13, 14; 15,16) zugeordnet sind, von denen die zur Atmosphärenseite gerichteten Schlitzdüsen (14, 16) mit Luft und die zur Seite der Durchlauf-Wärmebehandlungsanlage hin gerichteten Schlitzdüsen (13, 15) mit Schutzgas beaufschlagt sind.

2. Aerodynamische Abdichtung nach Anspruch 1, **dadurch gekennzeichnet, daß** die Schlitzdüsen (13, 14; 15, 16) drehbeweglich angeordnet sind.

3. Aerodynamische Abdichtung nach Anspruch 2, **dadurch gekennzeichnet, daß** die Schlitzdüsen (13, 14; 15, 16) an rohrförmigen, drehbar gelagerten und mit Gaskanälen (10) verbundenen Gaszuführungskörpern (4, 5, 6, 7) angeordnet sind.

4. Aerodynamische Abdichtung nach Anspruch 3, **dadurch gekennzeichnet, daß** die Gaszuführungskörper (4, 5, 6, 7) gegenüber dem jeweils zugeordneten Gaskanal (10) beidseitig mit einer plattenförmigen Dichtung (11) abgedichtet und zur Längsachse des jeweiligen Gaskanals (10 ) hin mit einem Öffnungsschlitz (12) versehen sind.

5. Aerodynamische Abdichtung nach einem der vorhergehenden Ansprüche, **dadurch gekennzeichnet, daß** in dem Raum zwischen seitlich benachbarten Schlitzdüsen (13, 14; 15, 16) eine Absaugeinrichtung angeordnet ist.

6. Aerodynamische Abdichtung nach einem der Ansprüche 1 bis 4, **dadurch gekennzeichnet, daß** in dem Raum zwischen seitlich benachbarten Schlitzdüsen (13, 14; 15, 16) eine Einrichtung zur Schutzgaseispeisung angeordnet ist.

7. Aerodynamische Abdichtung nach einem der vorhergehenden Ansprüche, **dadurch gekennzeichnet, daß** in dem Raum zwischen seitlich benachbarten Schlitzdüsen (13, 14; 15, 16) ein Brenner angeordnet ist.

8. Aerodynamische Abdichtung nach einem der vorhergehenden Ansprüche, **dadurch gekennzeichnet, daß** der Raum zwischen seitlich benachbarten Schlitzdüsen (13, 14; 15, 16) jeweils durch eine senkrecht zum durchlaufenden Metallband (3) verlaufende und nahe an dieses heranreichende Trennwand (18) geteilt ist.

9. Aerodynamische Abdichtung nach einem der Ansprüche 1 bis 7, **dadurch gekennzeichnet, daß** zwischen den einander zugewandten Seiten der Schlitzdüsen (13, 14; 15, 16) eine zum durchlaufenden Metallband (3) parallele Abdeckung angeordnet ist.

## Claims

1. Aerodynamic seal for continuous heat treatment systems with protective atmosphere having a slit nozzle adjacent to an opening cross section of the continuous heat treatment system to be sealed and directed towards a passing metal strip (3),
**characterized in that**
each side of the metal strip (3) is associated with two separate slit nozzles (13, 14; 15, 16) spaced apart one after the other in the passing direction of the metal strip (3), which each generate a gas jet directed perpendicular towards the metal strip (3) or away from each other at an angle towards the metal strip (3) and spaced apart from each other, of which the slit nozzles (14, 16) directed towards the atmosphere side act upon air, and the slit nozzles (13, 15) directed towards the side of the continuous heat treatment system act upon protective gas.

2. Aerodynamic seal according to claim 1, **characterized in that** the slit nozzles (13, 14; 15, 16) are rotatably arranged.

3. Aerodynamic seal according to claim 2, **characterized in that** the slit nozzles (13, 14; 15, 16) are arranged on tubular, pivoted gas supply components (4, 5, 6, 7) connected with gas channels (10).

4. Aerodynamic seal according to claim 3, **characterized in that** the gas supply components (4, 5, 6, 7) are sealed relative to the gas channel (10) on either side by a plate-shaped seal (11), and provided with a slit opening (12) towards the longitudinal axis of the respective gas channel (10) .

5. Aerodynamic seal according to one of the preceding claims, **characterized in that** a exhausting device is arranged in the space between laterally adjacent slit nozzles (13, 14; 15, 16).

6. Aerodynamic seal according to one of the claims 1 to 4, **characterized in that** a device for feeding in protective gas is arranged in the space between laterally adjacent slit nozzles (13, 14; 15, 16).

7. Aerodynamic seal according to one of the preceding claims, **characterized in that** a burner is arranged in the space between laterally adjacent slit nozzles (13, 14; 15, 16) .

8. Aerodynamic seal according to one of the preceding claims, **characterized in that** the space between laterally adjacent slit nozzles (13, 14; 15, 16) is divided by a separating wall (18) running perpendicular to the passing metal strip (3) and extending close to the latter.

9. Aerodynamic seal according to one of the claims 1 to 7, **characterized in that** a cover is arranged between the sides of the slit nozzles (13, 14; 15, 16) facing each other parallel to the passing metal strip (3).

## Revendications

1. Etanchéité aérodynamique d'installations de traitement thermique en continu avec une atmosphère de gaz protecteur avec des buses à fente délimitant une section d'ouverture à rendre étanche de l'installation de traitement thermique en continu et orientées vers une bande de métal (3) continue,
**caractérisée en ce que**
de chaque côté de la bande de métal (3) sont disposées deux buses à fente (13, 14 ; 15, 16) séparées, disposées à distance l'une derrière l'autre dans le sens de passage de la bande de métal (3), générant respectivement un jet de gaz orienté perpendiculairement à la bande de métal (3) ou orienté en formant un angle par rapport à la bande de métal (3) en partant de celle-ci et espacé de l'autre, dont les buses à fente (14, 16) orientées vers le côté atmosphère et les buses à fente (13, 15) orientées en direction du côté de l'installation de traitement de chaleur en continu sont alimentées respectivement en air et en gaz protecteur.

2. Etanchéité aérodynamique selon la revendication 1, **caractérisée en ce que** les buses à fente (13, 14 ; 15, 16) sont disposées de façon mobile en rotation.

3. Etanchéité aérodynamique selon la revendication 2, **caractérisée en ce que** les buses à fente (13, 14 ; 15, 16) sont disposées sur des éléments d'arrivée de gaz (4, 5, 6, 7) de forme tubulaire, logés de façon rotative et reliés aux canaux de gaz (10).

4. Etanchéité aérodynamique selon la revendication 3, **caractérisée en ce que** les éléments d'arrivée de gaz (4, 5, 6, 7) sont rendus étanches des deux côtés avec un joint (11) en forme de plaque par rapport au canal de gaz (10) respectivement attribué et sont pourvus d'une fente d'ouverture (12) en direction de l'axe longitudinal du canal de gaz (10) respectif.

5. Etanchéité aérodynamique selon l'une quelconque de revendications précédentes, **caractérisée en ce qu'**un dispositif d'aspiration est disposé dans l'espace entre des buses à fente (13, 14 ; 15, 16) voisines sur le côté.

6. Etanchéité aérodynamique selon l'une quelconque des revendications 1 à 4, **caractérisée en ce qu'**un dispositif pour l'injection de gaz protecteur est disposé dans l'espace entre des buses à fente (13, 14 ; 15, 16) voisines sur le côté.

7. Etanchéité aérodynamique selon l'une quelconque des revendications précédentes, **caractérisée en ce qu'**un brûleur est disposé dans l'espace entre des buses à fente (13, 14 ; 15, 16) voisines sur le côté.

8. Etanchéité aérodynamique selon l'une quelconque des revendications précédentes, **caractérisée en ce que** l'espace compris entre des buses à fente (13, 14 ; 15, 16) voisines sur le côté est divisé à chaque fois par une cloison de séparation (18) agencée perpendiculairement à la bande de métal (3) continue et se rapprochant de cette bande.

9. Etanchéité aérodynamique selon l'une quelconque des revendications 1 à 7, **caractérisée en ce qu'**un recouvrement parallèle à la bande de métal (3) continue est disposé entre les côtés opposés des buses à fente (13, 14 ; 15, 16).
